Europäisches Patentamt

European Patent Office

Office européen des brevets

(19)

(11) Publication number:  **0 200 473**
A2

(12)  **EUROPEAN PATENT APPLICATION**

(21) Application number: **86303081.3**

(22) Date of filing: **24.04.86**

(51) Int. Cl.⁴: **G 09 G 3/36**
**G 09 F 9/35, G 06 F 15/20**

(30) Priority: **24.04.85 GB 8510410**

(43) Date of publication of application:
**05.11.86 Bulletin 86/45**

(84) Designated Contracting States:
**AT BE CH DE FR IT LI NL SE**

(71) Applicant: **FORDS OF BRISTOL LIMITED**
**Tower House Fairfax Street**
**Bristol BS1 3BS(GB)**

(72) Inventor: **Atkinson, Maurice George**
**32 Langdale Avenue**
**Loughborough Leics.(GB)**

(74) Representative: **Stuart, Ian Alexander et al,**
**MEWBURN ELLIS & CO. 2/3 Cursitor Street**
**London EC4A 1BQ(GB)**

(54) **Multiple display system.**

(57) A multiple display system employs electronically changeable display members 36 (e.g. with liquid crystal devices) at point of sale, linked to a remote computer 16 which can read and/or change the data displayed by a desired display member 36. An array of pairs of conductors 13,22 by extend along edges of shelving 10,12,14, e.g. within rails 30 which can receive either conventional cards or the changeable display members 36. Display members 36 may also have means 52,54,56 for providing additional input data to the computer 16 e.g. for stocktaking. The system may include checkout assemblies which can automatically obtain product data from the computer 16 e.g. on reading a bar code on a product.

FIG.3

## MULTIPLE DISPLAY SYSTEM

The present invention relates to a display system having a multiplicity of variable display members. It is particularly, through not exclusively, concerned with displays of prices or other data relating to large numbers of different goods.

Broadly, the invention proposes the use of electronic display members, all coupled to a central computer which can access a desired display member to read and/or alter its display.

In one preferred form the invention provides apparatus for displaying and updating product data, comprising:

    a)    a computer;

    b)    at least one pair of elongate conductors coupled to said computer for transferring data to and from it;

    c)    a multiplicity of display members each of which is arranged to be releasably couplable to the or a said pair of conductors and has a respective code; the arrangement being such that a plurality of said members are couplable to said conductors in parallel, and the computer can access a desired coupled member by reading its code via the conductors, whereupon the data displayed by that member can be changed by the computer (and preferably data from the member can be received by the computer). Preferably said pair of conductors supplies power to display members coupled thereto. Thus a single pair of conductors can serve to power and to control a very large number of display members. It may also be desired to have at least one set of pairs of conductor portions connected in parallel, display members being couplable to any such pair, the set being linked directly or indirectly via a single pair of conductor portions to the computer, which can access all members coupled to the set, preferably individually.

The apparatus may be such that the display members are mountable at the edges of shelves, like conventional display cards. Thus there may be at least one rail which may be suitable for connection to a shelf edge, the rail incorporating portions of the conductors; the rail and the display members being mutually adapted for releasable mechanical and electrical coupling. Of course, some or all of the display members may be different from this, e.g. being suitable for mounting so as to project beneath a shelf or on an end wall of a display gondola.

In an apparatus suitable for a supermarket there may be a checkout assembly in data communication with the computer so that the checkout assembly can cause the computer to provide data received from or relating to a desired display member and communicate those data to the checkout assembly.

An embodiment of the invention will now be described in greater detail by way of example with reference to the accompanying drawings in which:

Fig. 1 is a schematic plan view of a supermarket hall having a display system embodying the invention;

Fig. 2 is a perspective view of a portion of a rail of the display system of Fig. 1;

Fig. 3 is a perspective view showing a display member being engaged with a rail; and

Fig. 4 is a perspective view of device useful for stock checking.

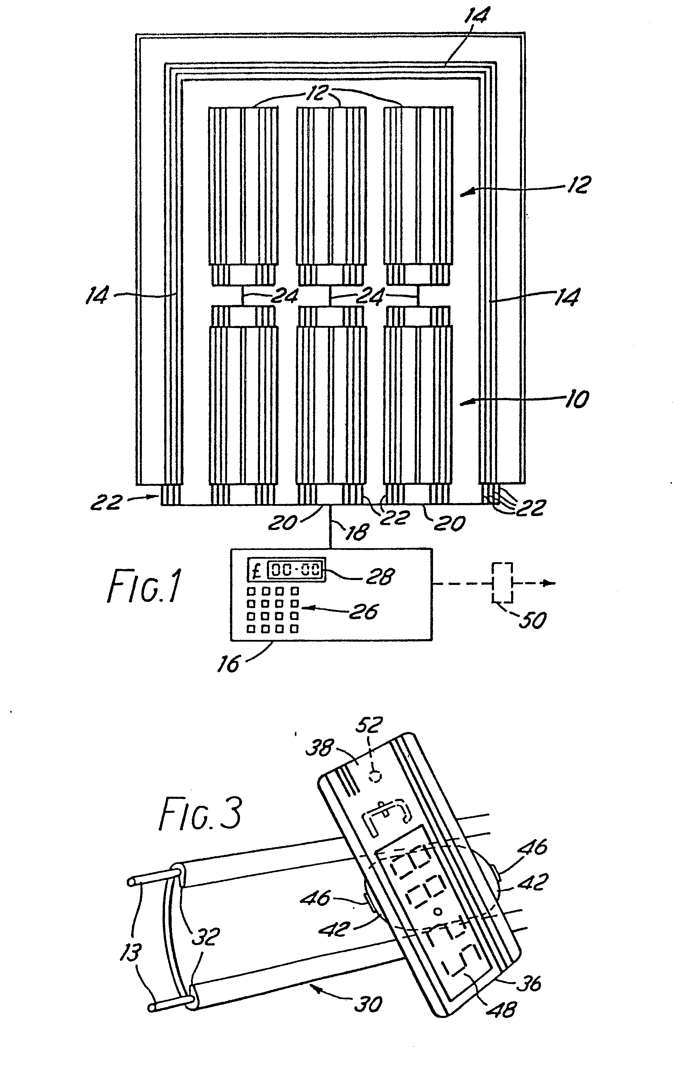

Fig. 1 shows a supermarket hall having two rows of shelving units or gondolas 10,12, and also having peripheral shelving 14 around three sides. In this particular example all of the gondolas 10,12 have four shelves on either side, and the peripheral shelving too has four levels. A monitoring and controlling computer 16 may be located at a distance from the hall, e.g. in a manager's office. It is connected to the displays in the hall by a single pair of wires 18. This splits into two pairs 20, each of which branches into sixteen pairs 22, all connected in parallel. Each shelf of each gondola 10,12 and of the peripheral shelving has a respective pair of conductors 13. Those of the first row of gondolas 10 and the lateral sides of the peripheral shelving are connected at one end to respective ones of the thirty-two branches 22. At the other end of each of these gondolas 10 the conductors are connected to a single pair of conductors 24 (one per gondola 10) which leads to the corresponding gondola 12 of the second row, where it is connected to the conductors of the eight shelves thereof. The connecting pairs 24 may extend through existing service ducts.

Of course, the array of shelves need not be as shown but is infinitely variable. The underlying principle is that a pattern of conductor pairs extends wherever a display is required, and this pattern is composed of conductor pair portions that may all be connected (serially or in parallel) to a single original pair 18.

The computer 16 includes a power supply to the conductor pair 18 for supplying power to the pattern, at a safe voltage (e.g. 9-12 volts D.C.). It also has means for transmitting and receiving data signals via the same pair 18, the signals being encoded in specific frequency bands or as digital pulses. There are a data store, a keyboard 26 for inputting data, and a display 28.

Each shelf has a rail 30 (Figs. 2,3) secured to its outer edge. This is a plastics extrusion generally similar to those used for holding display cards. Thus it has opposed upper and lower channel portions 32 between which a card is engageable, and rear formations 34 for attachment to the shelf. But unlike known rails, the rails 30 have the conductors 13 extending within the channel portions 32, so as to be contactable but not generally visible. (They do not interfere with the use of the rails to support conventional display cards of insulating materials e.g. paper or plastics.) The conductors 13 could be applied during the extrusion of the rail 30, or subsequently. Rails may be made in convenient lengths, which may be joined by connectors as required. At the inner end of a shelf the rail may have an end cap, from which shrouded conductors lead (within the gondola) to a junction with a connecting pair 24.

A display member 36 has a generally flat elongate body 38 with a rearward projection with portions 42 which extend above and below the body 38 constituting a bayonet connector. This is shaped so that it is insertable between the channel portions 32 of a rail when the member 36 is angled as shown in Fig. 3. Rotation of the member 36 until it extends parallel to the rail drives the portions 42 into the channels, and the member 36 is thus held, preferably with a snap-action. When engaged, the member 36 is substantially flush with the front of the rail 30. The connector portions 42 bear a pair of contacts 46 arranged so that engagement in a rail connects them to respective conductors 13.

At the front of the member 36 a display 48, suitably of liquid crystal type, is visible. This may have permanent pound and decimal point signs. Characters may be 12.5-17.5mm high. Display colour may be varied by (e.g. polarising) filters. Inside the member 36 is a dedicated microchip coupled between the display 48 and the contacts 46.

Once an array of rails 30 has been connected to the computer 16, a very large number of display members 36 can be connected wherever required. Each member 36 has a respective code designation, stored in its microchip. Any member 36 can be "accessed" by the computer by transmission of this code along the conductors (13,18 etc.). Two-way communication between the computer and that member is thus established. For example, in reverse mode the computer operator can check the display of a member by causing its readout to appear on the computer's display 28. In forward mode he can then send a signal to the member to alter the display or, for example, to cause it to flash on and off to draw customers' attention to a special offer. After a change of display has been ordered, this can be checked by resuming reverse mode.

The computer 16 may be linked to a central computer (e.g. via a software interface 50: Fig. 1), which may be linked to many remote computers 16 e.g. via telephone lines.

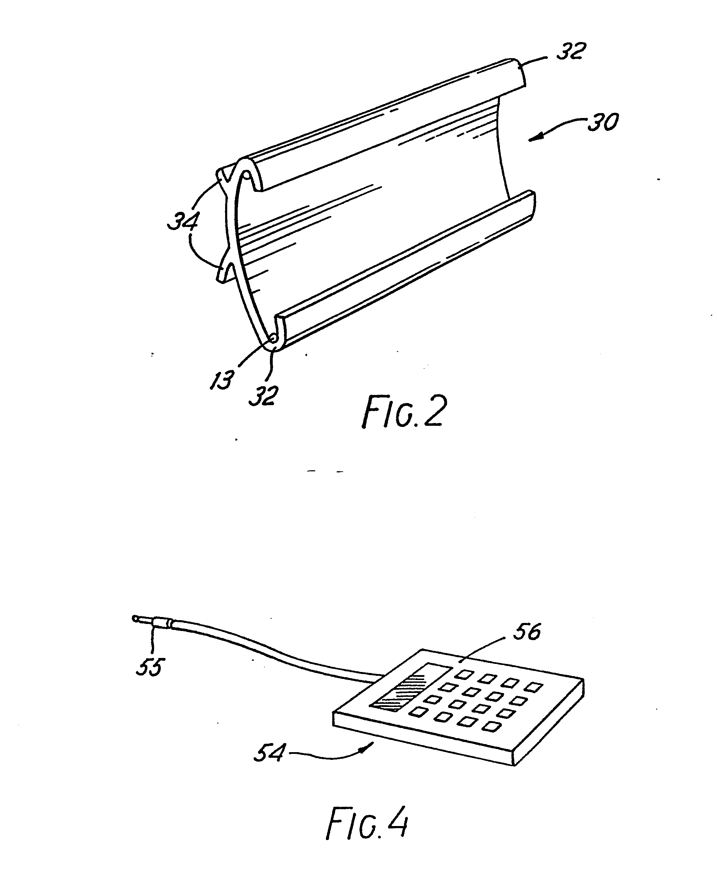

The possibility of electronic communication between the location of the goods and a remote computer can be exploited further. For example a display member 36 can have an input interface 52, which might be a standard electrical socket or a photoelectric detector. An input device 54 (Fig. 4) has a complementary output source 55 coupled to a keyboard device 56. This device 54 can be temporarily connected to any member 36 to send data to the computer. For example, for stocktaking the number of items on the shelf portion corresponding to the member 36 can be fed to the computer, which may automatically recognise the source of the data (by reading the code) and store it appropriately. Alternatively or additionally the shelves may have automatic means for stocktaking, e.g. weighing means, so that the entire operation can be performed from afar. At checkouts, tills may be linked to the display system, e.g. so that the displayed price of an article can be checked. For example a till may read a bar code on the article and transmit this to the computer 16, which identifies the related display member 36 and causes its display to be relayed to the till. There it may be displayed and incorporated in a bill.

Any breaks in the conductor paths may be detected by the computer and their location indicated in terms of the nearest display member that is still accessible.

The system may have emergency power supply batteries to keep the display members energised in case of loss of power from the computer. These need not be very large, since the displays draw very little current. The computer may be arranged to store all of the data displayed by the display members. Then if there is no emergency power supply (or if this is exhausted), it may automatically reset each display member when power is resumed.

8

CLAIMS:

1.    Apparatus for displaying and updating product data, comprising:

         a)    a computer (16);

         b)    at least one pair of elongate conductors (22) coupled to said computer (16) for transferring data to and from it;

         c)    a multiplicity of display members (36) each of which is arranged to be releasably couplable to the or a said pair of conductors (22) and has a respective code; the arrangement being such that a plurality of said members (36) are couplable to said conductors (22) in parallel, and the computer (16) can access a desired coupled member (36) by reading its code via the conductors (22), whereupon the data displayed by that member (36) can be changed by the computer (16).

2.    Apparatus according to claim 1, wherein the computer (16) can receive data from an accessed member (36).

3.    Apparatus according to any preceding claim, wherein the or each said pair of conductors (22) is adapted to supply power to display members (36) coupled thereto.

4.    Apparatus according to any preceding claim, wherein said elongate conductors (22) comprise at least one set of pairs of conductor portions connected in parallel, display members (36) being couplable to any such pair, the set being linked via a single pair of conductor portions (18) to the computer (16), which can access all members (36) coupled to the set.

5.      Apparatus according to any preceding claim, comprising a plurality of said display members (36) adapted to be mounted at the edges of shelves (10,12,14).

6.      Apparatus according to any preceding claim which includes at least one rail (30) incorporating portions (13) of a respective pair of conductors (22); the rail (30) and the display members (36) being mutually adapted for releasable mechanical and electrical coupling.

7.      Apparatus according to claim 6, wherein a said rail (30) has opposed channel portions (32) between which can be supported either display members (36) or display cards; the channels (32) housing the conductor portions (13).

8.      Apparatus according to any preceding claim, wherein the display members (36) comprise liquid crystal display means (48).

9.      Apparatus according to any preceding claim, wherein a plurality of said display means (36) have input interfaces (52), and the apparatus includes an input device (54) couplable to such an interface (52) of a coupled member (36) to send data to the computer (16).

10.      Apparatus according to any preceding claim, including a checkout assembly in data communication with the computer (16) so that the checkout assembly can cause the computer (16) to provide data received from or relating to a desired display member (36) and communicate those data to the checkout assembly.

1/2

0200473

FIG.1

FIG.3

0200473

32

30

34

13

32

FIG.2

55

56

54

FIG.4